# EUROPÄISCHE PATENTSCHRIFT

(11) **EP 0 356 621 B1**
(45) Veröffentlichungstag und Bekanntmachung des Hinweises auf die Patenterteilung: **20.01.1993**
(21) Anmeldenummer: 89109525.9
(22) Anmeldetag: 26.05.1989
(51) Int. Cl.: F16K 27/02, F16K 11/048

(54) **Dreiwege-Ventil**
Three-way valve
Vanne à trois voies

(30) Priorität: 12.08.1988 DE 8810233 U
(43) Veröffentlichungstag der Anmeldung: 07.03.1990
(73) Patentinhaber: F.W. Oventrop KG, 59939 Olsberg (DE)
(72) Erfinder: Schmalenbach, Dietrich, Dipl.-Ing., D-7066 Baltmannsweiler (DE); Henke, Bernhard, Dipl.-Ing., D-5790 Brilon (DE)
(74) Vertreter: Patentanwälte Dipl.-Ing. Conrad Köchling Dipl.-Ing. Conrad-Joachim Köchling

(56) Entgegenhaltungen:
- EP-A- 0 249 673
- EP-A- 0 257 539
- CH-A- 501 178
- DE-A- 2 147 026
- DE-A- 2 209 394
- DE-A- 2 439 527

## Beschreibung

Die Erfindung betrifft ein Dreiwege-Ventil zur Verteilung bzw. zum Umschalten von Volumenströmen bei bivalenten Heizungsanlagen oder Wärmespeichern mit einem Ventilgehäuse mit einem starr damit verbundenen Eingang und zwei Ausgängen, sowie einem Doppelventileinsatz zur Lenkung des Volumenstroms zu den Ausgängen, wobei die die beiden Ventilkörper des Doppelventileinsatzes halternde Ventilspindel mittels eines Stellorganes axial verstellbar ist.

Die bisher üblichen aus der betrieblichen Praxis bekannten derartigen Dreiwege-Ventile besitzen einen starren Eingang, einen koaxial dazu ausgerichteten ersten Ausgang und einen rechtwinklig dazu gerichteten zweiten Ausgang. Das durchfließende Medium wird je nach Stellung der Ventilspindel von einem auf den anderen Ausgang umgelenkt. Zur Steuerung dieser Ventile werden beispielsweise Zweipunktregler und Steuerungen mit elektrothermischem Stellantrieb eingesetzt. Der gerade Durchgang ist dabei stromlos geschlossen und der dem Stellantrieb gegenüberliegende Anschluß voll geöffnet. Bei Stromdurchfluß ist es umgekehrt. Es ist auch die Verwendung von stetigen Reglern zur Betätigung der Ventilspindel möglich, wobei dies üblicherweise Proportionalregler ohne Hilfsenergie sind, die auch Zwischenstellungen erlauben. Bei steigender Temperatur am Fühlelement wird der gerade Durchgang geschlossen und der abgewinkelte geöffnet.

Es hat sich bei diesen Ventilen als nachteilig herausgestellt, daß die Ausgänge starr angeordnet sind, da dies den Installateur hinsichtlich des Einbaus solcher Dreiwege-Ventile behindert.

Ausgehend von diesem Stand der Technik liegt der Erfindung die Aufgabe zugrunde, ein Dreiwege-Ventil gattungsgemäßer Art zu schaffen, welches bei einfachem Aufbau die Installationsmöglichkeiten, insbesondere die Integration in Rohrleitungsnetze, vereinfacht.

Zur Lösung dieser Aufgabe schlägt die Erfindung vor, daß der Eingang und die Ausgänge quer zur Ventilspindel verlaufend gerichtet sind und die Ausgänge durch mit Ringkammern versehene und um die durch die Ventilspindel gebildete Gehäusemittelachse drehbare Anschlußstutzen gebildet sind, wobei die Ringkammern auf, in Richtung der Gehäusemittelachse gesehen, vor und hinter dem starren Eingang ausgebildete rohrförmige Sitzelemente des Gehäuses aufgeschoben und in axialer Richtung lagegesichert sind, von denen das eine Sitzelelement zur Aufnahme eines die Ventilspindel tragenden Verschlußstückes und das andere, gegenüberliegende, zur Aufnahme eines weiteren Verschlußstückes ausgebildet ist.

Durch diese Anordnung und Ausbildung ist es prinzipiell möglich, den weiterhin starren Eingang mit der entsprechenden Anschlußleitung zu verbinden und die Ausgänge durch jeweils gesonderte Drehung auf dem Gehäusekörper in eine solche Richtung zu bringen, die für den weiteren Anschluß an weitere Rohrleitungen und dergleichen vorteilhaft ist.

Durch die Ausbildung gemäß Anspruch 1 und die Anordnung der Sitzelemente, der auf dieser aufgeschobenen Ausgangsstutzen und der Verschlußstücke ist ein äußerst einfacher Aufbau erreicht, der sich in Fertigungs- und Montagevorteilen zeigt.

Eine bevorzugte Weiterbildung wird darin gesehen, daß das Gehäuse etwa mittig zwischen den Ausgangs-Anschlußstutzen einen von der Ventilspindel durchgriffenen Kanal aufweist, in den der den Eingang bildende Anschlußstutzen einmündet und der über je eine mittels eines der beiden Ventilkörper absperrbare Öffnung einer in Gehäuse-mittelachsrichtung oberhalb bzw. unterhalb des Kanals angeordneten Kammer verbindbar ist, welche Kammern die radialen Durchflußöffnungen aufweisen, die von den Ringkammern der Anschlußstutzen umgeben sind.

Weiterhin ist bevorzugt, daß die Ausgangs-Anschlußstutzen radiale Durchflußöffnungen der Gehäusewandung abgedichtet umgebende Ringkammern aufweisen, von denen jeweils der Anschlußstutzen radial abragt.

Schließlich ist bevorzugt, daß die Ringkammern samt Anschlußstutzen mittels Sprengringen axial unverschieblich, drehbar am Gehäuse befestigt sind.

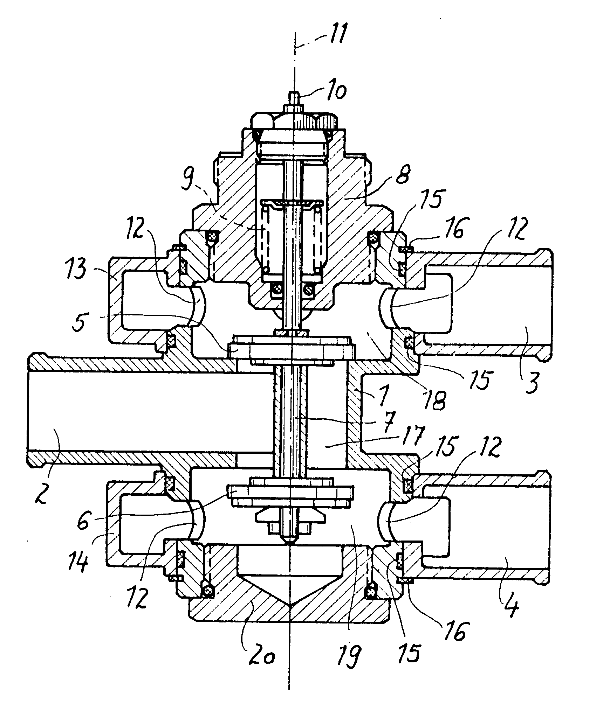

Ein Ausführungsbeispiel der Erfindung ist in der Zeichnung dargestellt und im folgenden näher beschrieben.
Die einzige Zeichnungsfigur zeigt ein Dreiwege-Ventil im Schnitt.

Das Dreiwege-Ventil besteht im wesentlichen aus einem Ventilgehäuse 1 mit einem Eingang 2 und zwei Ausgängen 3,4. Im Ventilgehäuse 1 ist ein Doppelventileinsatz mit den Ventilkörpern 5,6 vorgesehen, die auf einer gemeinsamen Ventilspindel 7 gehaltert sind. Der Doppelventileinsatz wirkt mit entsprechenden Sitzen zusammen, so daß der Eingang 2 alternativ mit dem Ausgang 3 oder dem Ausgang 4 in Verbindung steht. Die Ventilspindel 7 ist über ein Verschlußstück 8 in das Gehäuse 1 eingeschraubt und durch eine Schraubendruckfeder 9 vorgespannt. Außenseitig ragt ein Betätigungsende 10 der Ventilspindel aus dem Gehäuse bzw. aus dem Verschlußstück 8 ab. welches mittels eines geeigneten Stellorganes betätigbar ist. Bei in der Zeichnung nach unten gedrückter Ventilspindel 7 ist der Eingang 2 mit dem Ausgang 4 verbunden, während bei unter Wirkung der Feder 9 nach relativ oben verstellter Ventilspindel 7 der Eingang 2 mit dem Ausgang 3 in Verbindung steht.

Erfindungsgemäß sind der Eingang 2 und die Ausgänge 3 und 4 quer, insbesondere rechtwinklig zur Ventilspindel verlaufend ausgerichtet, wobei der Eingang in an sich bekannter Weise durch einen starr mit dem Gehäuse 1 verbundenen Anschlußstutzen gebildet ist und die Ausgänge 3,4 durch um die Gehäusemittelachse 11 drehbarer Anschlußstutzen gebildet sind. Die Anschlußstutzen weisen radiale Durchflußöffnungen 12 der Gehäusewandung abgedichtet umgebende Ringkammern 13, 14 auf, von denen jeweils der zugehörige Anschlußstutzen radial abragt. Die Ringkammern sind durch O-Ringe 15 abgedichtet und durch Sprengringe 16 axial unverschieblich aber radial drehbar am Gehäuse 1 gehaltert Das Gehäuse 1 weist etwa mittig zwischen den Anschlußstutzen (Ausgänge 3, 4) einen von der Ventilspindel 7 durchgriffenen Kanal 17 auf, in den der den Eingang 2 bildende Anschlußstutzen einmündet. Der Kanal 17 ist über je eine mittels eines der beiden Ventile 5, 6 absperrbare Öffnung einer in Gehäuseachsrichtung oberhalb bzw. unterhalb des Kanals 17 angeordneten Kammer 18 bzw. 19 verbindbar. Diese Kammern weisen die radialen Öffnungen 12 auf, die von den Ringkammern 13, 14 umgeben sind. Der Zusammenbau des Ventils erfolgt in der Weise, daß auf die in der Zeichnung oben und unten befindlichen rohrförmigen Sitzelemente des Gehäuses 1 die Ringkammern 14 aufgeschoben und durch Anordnung der Sprengringe 16 lagegesichert werden. Anschließend kann das Verschlußscück 8 mit dem Ventilkörper 5 von oben in die entsprechende Aufnahme eingeschraubt werden. Anschließend wird durch die untere Zugangsöffnung der Ventilkörper 6 aufgeschraubt und das Verschlußstück 20 abgedichtet eingeschraubt. Die Beweglichkeit der Ausgänge 3 und 4 ist nicht durch den Eingang 2 behindert, da die Drehebenen der Eingänge 3 und 4 außerhalb der vom Eingang 2 belegten Fläche liegen.

Die Erfindung ist nicht auf das Ausführungsbeispiel beschränkt, sondern im Rahmen der Offenbarung vielfach variabel.

## Patentansprüche

1. Dreiwege-Ventil zur Verteilung bzw. zum Umschalten von Volumenströmen bei bivalenten Heizungsanlagen oder Wärmespeichern mit einem Ventilgehäuse (1) mit einem starr damit verbundenen Eingang (2) und zwei Ausgängen (3,4), sowie einem Doppelventileinsatz zur Lenkung des Volumenstroms zu den Ausgängen (3,4), wobei die die beiden Ventilkörper (5,6) des Doppelventileinsatzes halternde Ventilspindel (7) mittels eines Stellorganges axial verstellbar ist,
**dadurch gekennzeichnet,** daß der Eingang (2) und die Ausgänge (3,4) quer zur Ventilspindel (7) verlaufend gerichtet sind und die Ausgänge (3,4) durch mit Ringkammern (14) versehene und um die durch die Ventilspindel (7) gebildete Gehäusemittelachse (11) drehbare Anschlußstutzen gebildet sind, wobei die Ringkammern (14) auf, in Richtung der Gehäusemittelachse gesehen, vor und hinter dem starren Eingang (2) ausgebildete rohrförmige Sitzelemente des Gehäuses (1) aufgeschoben und in axialer Richtung lagegesichert sind, von denen das eine Sitzelement zur Aufnahme eines die Ventilspindel (7) tragenden Verschlußstückes (8) und das andere, gegenüberliegende, zur Aufnahme eines weiteren Verschlußstückes (20) ausgebildet ist.

2. Dreiwege-Ventil nach Anspruch 1,
**dadurch gekennzeichnet,** daß das Gehäuse (1) etwa mittig zwischen den Ausgangs-Anschlußstutzen einen von der Ventilspindel (7) durchgriffenen Kanal (17) aufweist, in den der den Eingang (2) bildende Anschlußstutzen einmündet und der über je eine mittels eines der beiden Ventilkörper (5,6) absperrbare Öffnung einer in Gehäusemittelachsrichtung oberhalb bzw. unterhalb des Kanals (17) angeordneten Kammer (18,19) verbindbar ist, welche Kammern die radialen Durchflußöffnungen (12) aufweisen, die von den Ringkammern (13,14) der Anschlußstutzen umgeben sind.

3. Dreiwege-Ventil nach Anspruch 1 oder 2,
**dadurch gekennzeichnet,** daß die Ausgangs-Anschlußstutzen radiale Durchflußöffnungen (12) der Gehäusewandung abgedichtet umgebende Ringkammern (13,14) aufweisen, von denen jeweils der Anschlußstutzen radial abragt.

4. Dreiwege-Ventil nach einem der Ansprüche 1 bis 3,
**dadurch gekennzeichnet,** daß die Ringkammern (13,14) samt Anschlußstutzen mittels Sprengringen (16) axial unverschieblich, drehbar am Gehäuse (1) befestigt sind.

## Claims

1. A three-way valve for the distribution or reversal of volumetric flows in two-condition heating installations or heat accumulators having a valve casing (1) having an inlet (2) rigidly connected thereto and two outlets (3, 4) and also a double valve insert for directing the volumetric flow to the outlets (3, 4), the valve spindle (7), which retains the two valve members (5, 6) of the double valve insert, being axially adjustable by means of an adjusting member, characterized in that the inlet (2) and the outlets (3, 4) are directed extending transversely of the valve spindle (7) and the outlets (3, 4) are formed by connecting spigots which have annular chambers (14) and are rotatable around the casing central axis (11) formed by the valve spindle (7), the annular chambers (14) being slipped on to tubular seat elements of the casing (1) formed upstream and downstream of the rigid inlet (2), viewed in the direction of the casing central axis, and secured in position in the axial direction, one seat element being constructed to receive a closure member (8) bearing the valve spindle (7) and the other, opposite seat element being constructed to receive another closure member (20).

2. A three-way valve according to claim 1, characterized in that the casing (1) has substantially centrally between the outlet connecting spigots a channel (17) through which the valve spindle (7) extends and into which the connecting spigot forming the inlet (2) discharges and which can be connected via an aperture closable by means of one of the two valve members (5, 6) to a chamber (18, 19) disposed above and below the channel (17) respectively, viewed in the direction of the casing central axis, said chambers having the radial flow apertures (12), which are enclosed by the annular chambers (13, 14) of the connecting spigots.

3. A three-way valve according to claims 1 or 2, characterized in that the outlet connecting spigots have annular chambers (13, 14) which enclose in sealing-tight relationship radial flow apertures (12) of the casing wall from each of which the connecting spigot projects radially.

4. A three-way valve according to one of claims 1 to 3, characterized in that the annular chambers (13, 14) together with the connecting spigots are attached to the casing (1) axially non-displaceably but rotatably by means of circlips (16).

## Revendications

1. Vanne à trois voies pour la répartition ou la commutation de courants volumétriques dans des installations de chauffage ou des accumulateurs de chaleur bivalents, comportant un boîtier de vanne (1) muni d'une admission (2) qui y est rigidement reliée et de deux évacuations (3, 4), ainsi qu'un organe d'obturation double pour le guidage du courant volumétrique vers les évacuations (3, 4), la broche de vanne (7) équipée des deux corps de vanne (5, 6) de l'organe d'obturation double étant réglable axialement à l'aide d'un organe de commande,
caractérisée en ce que l'admission (2) et les évacuations (3, 4) sont orientées transversalement par rapport à la broche de vanne (7) et en ce que les évacuations (3, 4) sont formées par des tubulures de raccordement qui sont munies de chambres annulaires (14) et qui sont pivotables autour de l'axe médian de boîtier (11), constitué par la broche de vanne (7), les chambres annulaires (14) étant montées et sécurisées en position axiale devant et derrière l'admission rigide (2), vu selon la direction de l'axe médian de boîtier, sur des éléments de siège tubulaires du boîtier (1), dont l'un des éléments de siège est agencé pour recevoir un élément d'obturation (8) qui porte la broche de vanne (7) et dont l'autre élément de siège, opposé, est agencé pour recevoir un autre élément d'obturation (20).

2. Vanne à trois voies selon la revendication 1,
caractérisée en ce que le boîtier (1) comporte, environ au milieu entre les tubulures de raccordement d'évacuation, un canal (17) traversé par la broche de vanne (7), dans lequel débouche la tubulure de raccordement qui forme l'admission (2), le canal (17) étant reliable à chaque fois une chambre (18, 19) disposée au-dessus et en dessous de lui, vu selon la direction de l'axe médian, via chaque fois une ouverture obturable à l'aide de l'un des deux corps de vanne (5, 6), lesdites chambres comportant les ouvertures de passage radial de flux (12) qui sont enveloppées par les chambres annulaires (13, 14) des tubulures de raccordement.

3. Vanne à trois voies selon la revendication 1 ou 2, caractérisée en ce que les tubulures de raccordement d'évacuation comportent des chambres annulaires (13, 14) qui enveloppent de façon étanche les ouvertures radiales (12) pratiquées dans la paroi du boîtier, la tubulure de raccordement s'étendant chaque fois radialement sur lesdites chambres annulaires.

4. Vanne à trois voies selon l'une des revendications 1 à 3,
caractérisée en ce que les chambres annulaires (13, 14) avec les tubulures de raccordement sont agencées de façon à pouvoir tourner sur le boîtier (1) mais de façon axialement fixe à l'aide de bagues (16).
